# EUROPEAN PATENT SPECIFICATION

(11) **EP 2 639 786 B1**
(45) Date of publication and mention of the grant of the patent: **07.11.2018**
(21) Application number: 13158794.1
(22) Date of filing: 12.03.2013
(51) Int. Cl.: G09G 3/20

(54) **Method and portable terminal for displaying information**
Verfahren und tragbares Endgerät zum Anzeigen von Informationen
Terminal portable et procédé pour afficher des informations

(30) Priority: 12.03.2012 KR 20120025117
(43) Date of publication of application: 18.09.2013
(73) Proprietor: Samsung Electronics Co., Ltd., Gyeonggi-do 443-742 (KR)
(72) Inventor: Kwon, Woo-Up, Seoul (KR)
(74) Representative: HGF Limited

(56) References cited:
- EP-A2- 2 192 750
- EP-A2- 2 357 548
- WO-A2-2007/069116
- JP-A- 2005 165 129
- US-A1- 2008 291 225

## Description

### TECHNICAL FIELD OF THE INVENTION

The present disclosure relates to a method and a portable terminal for displaying information on a portable terminal. In particular, the portable terminal has a flexible display screen. More particularly, the present disclosure relates to an apparatus and a method for displaying information on a flexible display screen that is bent around such that two ends the display are brought together.

### BACKGROUND OF THE INVENTION

With the development of electronics communication industries, a portable terminal has become necessities of modern life as an important means for delivering information which changes rapidly.

Recently, with the development and popularity of a Graphic User Interface (GUI) system, portable terminals using a flexible touch screen display have been developed. Since the flexible display is bendable, it contributes to lead a sector in which the conventional display faces a limitation. Examples of sectors that can utilize the flexible display include an e-book sector capable of replacing publications such as magazines, a new portable Information Technology (IT) product sector such as an ultra-compact Personal Computer (PC) that can be carried by bending or rolling a display thereof, a smart card capable of confirming information on a real-time basis and the like.

There is, therefore, a continuing need for improvements in methods and apparatuses for displaying information on a flexible display.

US2008291225A1 discloses a method for resizing an active area of a flexible display or reconfigurable device can include a screen and a controller coupled to the screen. The controller can initiate a re-sizing program upon detection of an altered shape for the display or device and control the active area of the display based upon the altered shape. The controller can further resize fonts or graphic elements or both in correspondence to the dimensions of the active area. The controller can initiate the resizing program by altering the flexible display away from a flat position to a non-flat position for example. The flexible display can further include a switch that detects the mating of a first end of the flexible display with a second end which initiates the resizing program.

EP2192750A2 discloses a mobile terminal including a body and a display module, which is flexible and is capable of receiving a touch input and a method of controlling the mobile terminal are provided. The method includes setting the touch sensitivity of a display module to a first level; if the display module is bent or folded, setting the touch sensitivity of a bent or folded portion of the display module to a second level; and if the display module is unbent or unfolded and thus returns to its original shape, setting the touch sensitivity of the bent or folded portion of the display module back to the first level. Accordingly, it is possible to adaptively adjust the touch sensitivity of the display module according to whether and how the display module is bent or folded.

EP2357545A2 relates to an apparatus to control an image output position of a flexible display which moves a position of an image output area in a screen area when the flexible display is rotated. The apparatus may include: a bending measurement unit to measure a bending degree of the flexible display; a rotation measurement unit to measure a rotation degree and a rotation direction of the flexible display; and a controller to output an image at an image output area, and move a position of the image output area.

WO-2007/069116-A2 relates to a method and apparatus for displaying an image on an electronic device, the device comprising a plurality of display regions operable to display the image, wherein each display region faces in a different angular direction with respect to the vertical. The method comprises the steps of measuring the orientation of the device with respect to the vertical; determining a display region according to the measured orientation; and displaying the image on the determined display region.

JP-2005/165129-A relates to an image display device which allows image or information display to be suppressed and controlled in an area invisible for a main user with respect to image display on an electronic paper. The image display device comprises an electronic paper display device provided with a flexible display surface and a display control device for displaying images on the electronic paper display device. The electronic paper display device has a distortion detection means arranged along the periphery of the display surface, and the display control device has a distortion estimation means for estimating a bending state on the basis of detection information from the distortion detection means and a display control means for selectively displaying images in a desired area of the display surface of the electronic paper display device.

EP2357548 discloses a portable terminal with all the features of the preamble of independent claim 9.

### SUMMARY OF THE INVENTION

To address the above-discussed deficiencies of the prior art, it is an aim of the present invention to provide a method and a portable terminal for displaying information, in particular for a portable terminal with a flexible display screen by adjusting a display location on the display screen when the portable terminal is bent.

Another aim of the present disclosure is to provide an apparatus and a method for displaying information on a screen in which a user's field of vision is secured when the portable terminal is bent around.

According to the present invention, there is provided a method of displaying information on a portable terminal, and a portable terminal, as set forth in the appended claims. According to a first aspect of the present invention there is provided a method for displaying information on a portable terminal, the method comprising: determining if the portable terminal is bent; and comprising: calculating a rotation angle by which the portable terminal is rotated with respect to gravity in response to determination of bending of the portable terminal; determining a display location on a display screen corresponding to the calculated rotation angle, wherein the display location on the display screen corresponding to the calculated rotation angle is predefined based on a field of vision of a user; and displaying display information at the predetermined display location; characterised in that the rotation angle is calculated for rotation about two axes, each axis being orthogonal to each other and to the direction of gravity; and wherein the display location is determined along two orthogonal axes across the surface of the display screen.

According to a second aspect of the present invention there is provided a portable terminal comprising: a display screen; and a controller configured to: determine whether the portable terminal is bent; and the controller being configured to: calculate a rotation angle by which the portable terminal is rotated with respect to the gravity direction in response to determination of bending of the portable terminal; determine a display location on the display screen corresponding to the calculated rotation angle, wherein the display location on the display screen corresponding to the calculated rotation angle is predefined based on a field of vision of user; and display display information at the predetermined display location on the display screen; charcterised in that the rotation angle is calculated for rotation about two axes, each axis being orthogonal to each other and to the direction of gravity; and wherein the display location is determined along two orthogonal axes across the surface of the display screen.

Another aspect, out of the scope of the invention, provides a computer program comprising instructions arranged, when executed, to implement a method and/or apparatus in accordance with any one of the above-described aspects. A further aspect, also out of the scope of the invention, provides machine-readable storage storing such a program.

In accordance with an embodiment of the present disclosure, an apparatus for detecting that a portable terminal is bent is provided. The apparatus includes an engagement unit configured to provide an engagement signal to a controller when a first end of the portable terminal is engaged with a second end of the portable terminal, and the controller configured to detect that the portable terminal is bent upon receiving the engagement signal provided from the engagement unit.

In accordance with another embodiment of the present disclosure, an information display apparatus of a portable terminal is provided. The apparatus includes a display unit configured to display at a display location on a screen, a sensor configured to provide motion information of the portable terminal when the portable terminal is bent, and a controller configured to adjust the display location based on the motion information provided from the sensor.

In accordance with another embodiment of the present disclosure, an information display apparatus of a portable terminal is provided. The apparatus includes a display unit configured to display at a display location on a screen, a first sensor configured to provide a signal reporting that the portable terminal is bent, a second sensor configured to provide motion information of the portable terminal upon receiving from the first sensor the signal reporting that the portable terminal is bent, and a controller configured to adjust the display location based on the motion information provided from the second sensor.

In accordance with another embodiment of the present disclosure, a method of detecting that a portable terminal is bent is provided. The method includes providing an engagement signal when a first end of the portable terminal is engaged with a second end of the portable terminal, and detecting that the portable terminal is bent upon receiving the provided engagement signal.

In accordance with another embodiment of the present disclosure, a method of displaying information of a portable terminal is provided. The method includes displaying information at a display location on a screen, providing motion information of the portable terminal when the portable terminal is bent, and adjusting the display location based on the motion information provided.

In accordance with another embodiment of the present disclosure, an information display method of a portable terminal is provided. The method includes displaying information at a display location on a screen, providing a signal reporting that the portable terminal is bent, providing motion information of the portable terminal upon receiving the provided signal reporting that the portable terminal is bent, and adjusting the display location on the screen based on the motion information provided.

Before undertaking the DETAILED DESCRIPTION OF THE INVENTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely. Definitions for certain words and phrases are provided throughout this patent document, those of ordinary skill in the art should understand that in many, if not most instances, such definitions apply to prior, as well as future uses of such defined words and phrases.

### BRIEF DESCRIPTION OF THE DRAWINGS

For a more complete understanding of the present disclosure and its advantages, reference is now made to the following description taken in conjunction with the accompanying drawings, in which like reference numerals represent like parts:
FIG. 1 illustrates that a portable terminal employing a flexible display is worn on a wrist according to an exemplary embodiment of the present disclosure ;
FIG. 2 is a perspective view of a portable terminal according to an exemplary embodiment of the present disclosure;
FIGs 3 and 4 illustrate an engagement unit for wearing a portable terminal on a wrist according to an exemplary embodiment of the present disclosure;
FIG. 5 is a very high level of block diagram of a portable terminal according to an exemplary embodiment of the present disclosure;
FIG. 6 illustrates a method for displaying information on a portable terminal according to an exemplary embodiment of the present disclosure;
FIG. 7 is a flowchart illustrating a process for displaying information on a portable terminal according to an exemplary embodiment of the present disclosure;
FIG. 8 is a flowchart illustrating a process for displaying information on a portable terminal according to an exemplary embodiment of the present disclosure;
FIG. 9 illustrates adjusting a display location on a screen of a portable terminal according to an exemplary embodiment of the present disclosure; and
FIG. 10 illustrates determining a display position on a screen of a portable terminal according to an exemplary embodiment of the present disclosure.

### DETAILED DESCRIPTION OF THE INVENTION

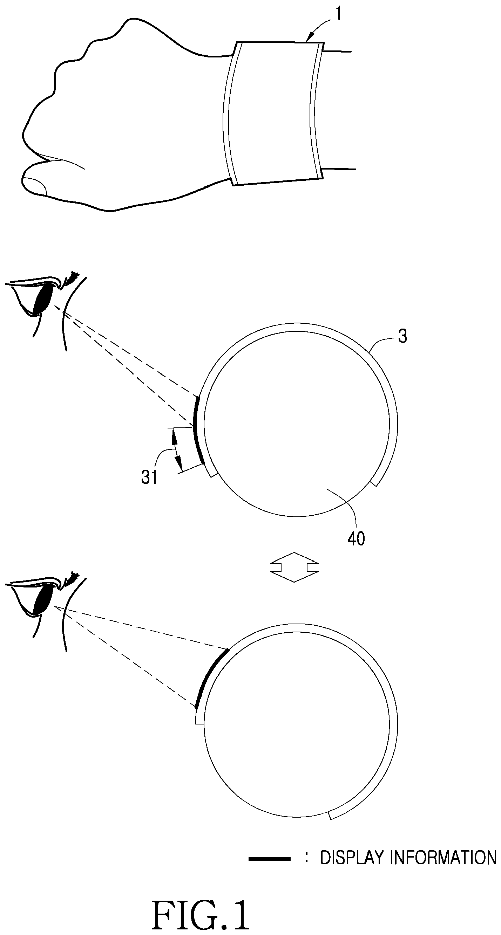

FIGURES 1 through 10, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged flexible electronic device. Exemplary embodiments of the present disclosure will be described herein below with reference to the accompanying drawings. In the following description, well-known functions or constructions are not described in detail since they would obscure the disclosure in unnecessary detail. Also, the terms used herein are defined according to the functions of the present disclosure. Thus, the terms may vary depending on the user's or the operator's intension and usage. That is, the terms used herein must be understood based on the descriptions made herein.

The present disclosure provides a method and apparatus for displaying information on a portable terminal which adjust a display location on a screen such that a user's field of vision is secured when the portable terminal is bent to be worn on the wrist.

According to an exemplary embodiment of the present disclosure, the portable terminal can be deformed in bending, folding, distorting, curving and the like. For example, the portable terminal can be rolled in a scroll fashion and can be curved (or bendable) like paper. The portable terminal includes a flexible display that is deformable. In addition, according to the exemplary embodiment of the present disclosure, the portable terminal is wearable on a body part such as a wrist or the like and has a structure described below.

FIG. 1 illustrates that a portable terminal employing the flexible display is worn on a wrist. Referring to FIG. 1, a portable terminal 1 is bent to wrap a user's wrist. In general, a user watches a flexible display 3 as if the user watches a wrist watch. Since a screen is bent, the user can turn a wrist 40 on which the portable terminal 1 is worn in order to see information 31 located beyond a field of vision.

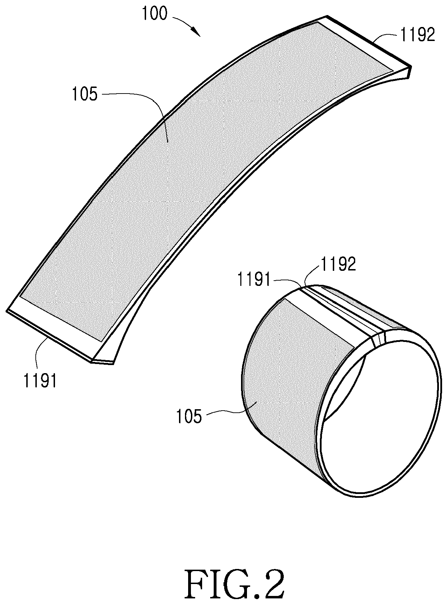

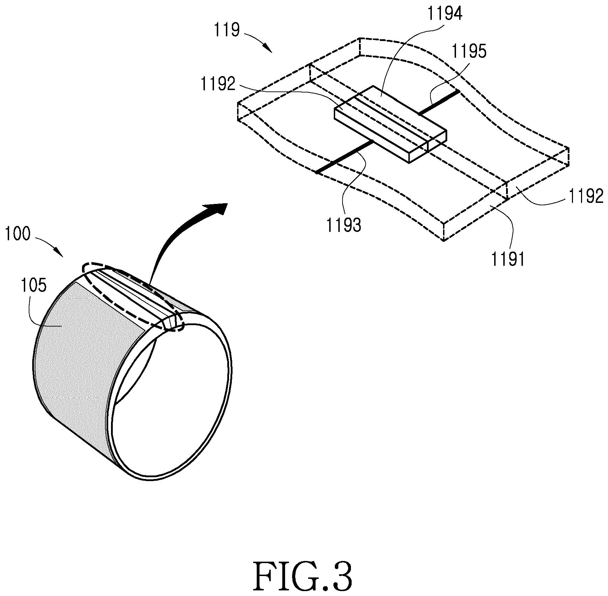

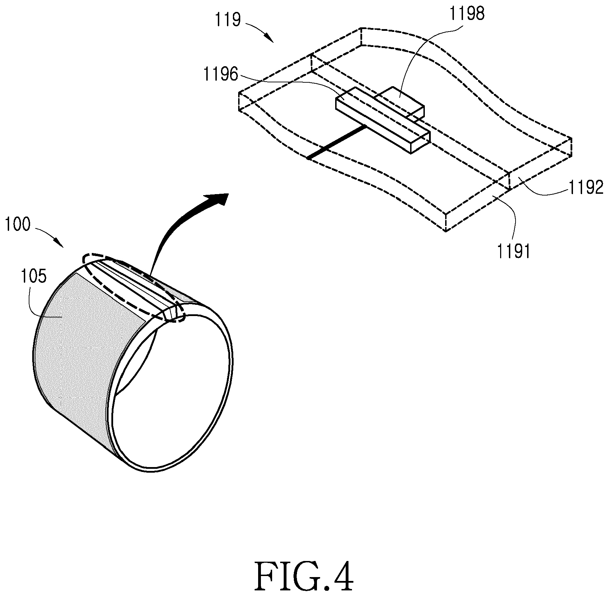

FIG. 2 is a perspective view of a portable terminal according to an exemplary embodiment of the present disclosure. Referring to FIG. 2, a portable terminal 100 is bent around when both ends 1191 and 1192 are engaged. The portable terminal 100 can include a flexible display 105 that provides a bendable screen. The portable terminal 100 includes an engaging unit at the both ends 1191 and 1192, which will be described below with reference to FIG. 3 and FIG. 4.

FIG. 3 and FIG. 4 illustrate a portable terminal worn on a wrist according to an exemplary embodiment of the present disclosure. The portable terminal 100 includes an engagement unit 119 for engaging the both ends 1191 and 1192. The engagement unit 119 has a mechanical and electrical structure. In particular, the portable terminal 100 can detect that the both ends 1191 and 1192 are engaged by means of the engagement unit 119. Referring to FIG. 3, the first end 1191 includes a male connector 1192 connected to a first circuit 1193, and the second end 1192 includes a female connector 1194 connected to a second circuit 1195.

When the first end 1191 and the second end 1192 are engaged, the male connector 1192 and the female connector 1194 are electrically connected and thereby the first circuit 1193 and the second circuit 1195 are connected each other, which is detected by the portable terminal 100. Referring to FIG. 4, the first end 1191 includes a switch 1196, and the second end 1192 includes a member capable of turning on the switch. When the first end 1191 and the second end 1192 are engaged, the switch 1196 turns on, which is detected by the portable terminal 100. Alternatively, the first end 1191 includes a sensor such as a proximity sensor, a magnetic sensor or a photo sensor, and the second end 1192 includes a member 1198 to trigger the sensor. When the first end 1191 and the second end 1192 are engaged, the member triggers the sensor, which is detected by the portable terminal 100.

When the first end 1191 and the second end 1192 are engaged, the portable terminal 100 is bent around. When the portable terminal 100 is bent, even if the portable terminal rotates, information on the screen is moved control so that a user's field of vision is secured.

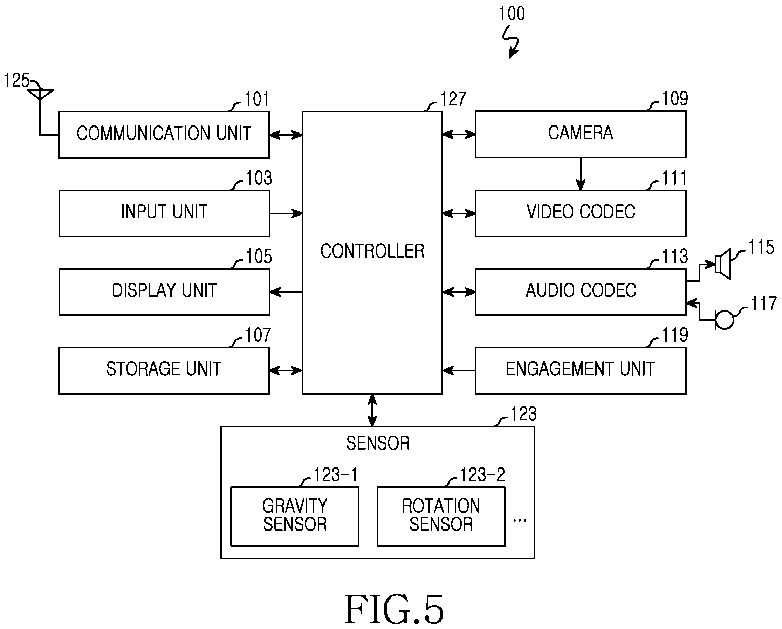

FIG. 5 is a high level block diagram of a portable terminal according to an exemplary embodiment of the present disclosure. Referring to FIG. 5, a portable terminal 100 includes a communication unit 101, an input unit 103, a display unit 105, a storage unit 107, a camera 109, a video codec 111, an audio codec 113, a speaker 115, a microphone 117, an engagement unit 119, a sensor 123, an antenna 125 and a controller 127.

The portable terminal 100 can be deformed. For example, the portable terminal 100 can be rolled or curved (or bendable) like paper. For the flexibility, at least one of the aforementioned elements is deformable. In particular, the display unit 105 includes a flexible display.

The portable terminal 100 includes a cellular phone, a Personal Communication System (PCS), a Personal Data Assistant (PDA), an International Mobile Communication-2000 (IMT2000) terminal, a fourth-generation broadband system terminal and the like.

The communication unit 101 has hardware and a software structures which enable video communication, audio communication and data communication. The communication unit 101 transmits and receives a radio signal through the antenna 125.

The input unit 103 receives a user input, and provides the controller 127 with an input signal corresponding to the user input.

The display unit 105 displays visual data under the control of the controller 127, which was demodulated by means of the video codec 111.

The storage unit 107 stores a program for controlling an overall operation of the portable terminal 100 and a variety of data which is input and output when a control operation of the portable terminal is executed.

The camera 109 generates image data by capturing an object, and displays the generated data to the video codec 111.

The audio codec 113 modulates image data provided from the camera 109, and provides the modulated data to the controller 127. In addition, the audio codec 113 demodulates image data provided from the controller 127, and thereafter provides the demodulated data to the display unit 105.

The audio codec 113 modulates audio data provided from the microphone 117, and provides the modulated data to the controller 127. Further, the audio codec 113 demodulates the audio data provided from the controller 127, and thereafter provides the demodulated data to the speaker 115.

The engagement unit 119 has a mechanical and electrical structure which engages the both ends of the portable terminal 100. In particular, if the both ends are engaged, the controller 127 detects the engagement.

The sensor 123 detects a physical situation of the portable terminal 100, and reports the detected situation to the controller 127. For example, the sensor 123 includes a gravity sensor 123-1, a rotation sensor 123-2, an acceleration sensor, a Global Positioning System (GPS) sensor, a temperature sensor and the like.

The controller 127 processes and controls video communication, audio communication, and data communication. The controller 127 configures an execution environment of the portable terminal 100, maintains information thereof, allows the portable terminal 100 to reliably operate and facilitates data input/output exchanges for the portable terminal 100.

In particular, the controller 127 detects that the portable terminal 100 is bent around from the engagement unit 119, detects the motion of the portable terminal 100 by means of the sensor 123, and controls an on-screen location of the information so that the information displayed on the display unit 105 is not beyond the user's field of vision.

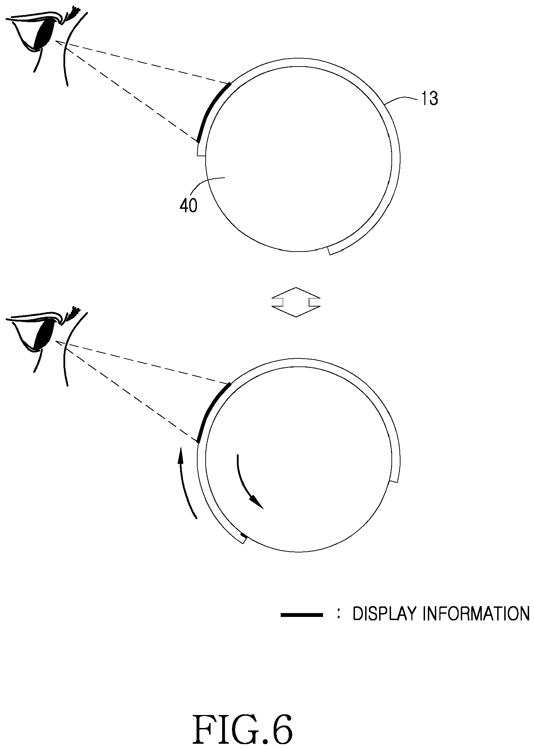

FIG. 6 illustrates an information display method of a portable terminal according to an exemplary embodiment of the present disclosure. Referring to FIG. 6, visual information is displayed at an initial position within a user's field of vision. The display location adjusts according to motion of the portable terminal when, for example, the user turns a wrist 40 so that the display location remains in the user's field of vision. As a result, the user may perceive that the display information does not move on the screen despite the motion of the portable device, and thus the display information remains visible to the user.

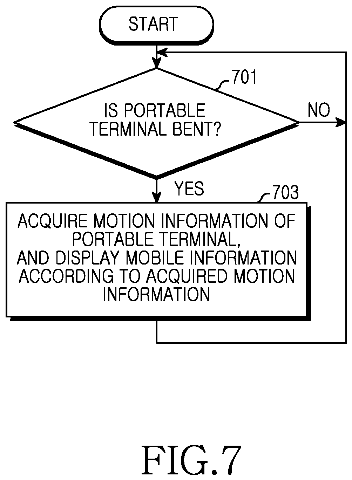

FIG. 7 is a flowchart illustrating an information display process of a portable terminal according to an exemplary embodiment of the present disclosure. Referring to FIG. 7, the controller 127 determines whether the portable terminal 100 is bent by means of the engagement unit 119 (step 701).

When the portable terminal 100 is bent around, the controller 127 receives motion information (e.g., a rotation angle, a rotation direction, a rotation speed, elasticity, etc.) of the portable terminal 100 from the sensor 123, and displays information that can be adjusted according to the motion information (step 703). For example, the controller 127 determines an on-screen location corresponding to the motion information provided from the sensor 123 by consulting a database or adopting an arithmetic algorithm, and displays information at the determined on-screen location.

Further, the sensor 123 provides the controller 127 with a first velocity at which the portable terminal 100 rotates, and the controller 127 adjust the display location on the screen at a second velocity in proportion to the first velocity provided from the sensor 123. In addition, the sensor 123 provides the controller 127 a direction in which the portable terminal 100 rotates, and the controller 127 adjusts the display location on the screen in an opposite direction so that the display location remains in the user's field of view.

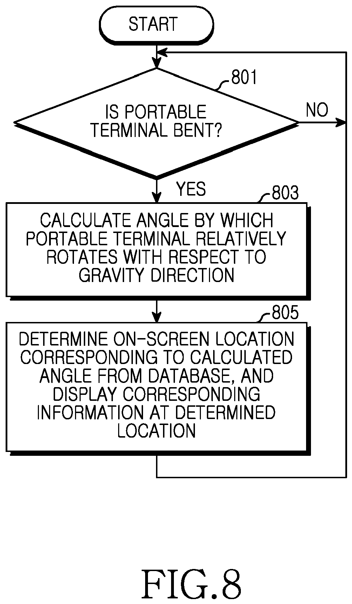

FIG. 8 is a flowchart illustrating an information display process of a portable terminal according to an exemplary embodiment of the present disclosure. Referring to FIG. 8, the controller 127 determines whether the portable terminal 100 is bent around from the engagement unit 119 (step 801).

When the portable terminal 100 is bent around, the controller 127 receives from the gravity sensor 123-1 a gravity direction and calculates an angle by which the portable terminal 100 is rotated with respect to the gravity direction (step 803).

Thereafter, the controller 127 determines a display location on a screen from a database corresponding to the calculated angle, and displays information at the determined position on a screen (step 805). The database specifies a display location on a screen for the angles by which the portable terminal may be rotated with respect to the gravity direction.

The information to display can be provided by various S/W applications, for example, a Short Message Service (SMS), a Multimedia Message Service (MMS), an e-mail, an application shortcut, a Social Network Service (SNS), an alarm, a software update and the like.

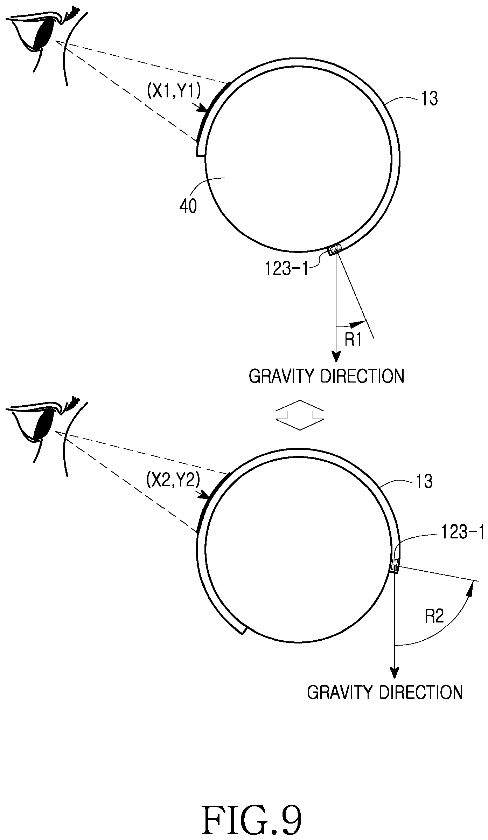

FIG. 9 illustrates adjusting a display location on a screen of a portable terminal according to an exemplary embodiment of the present disclosure. Referring to FIG. 9, the controller 127 detects that the portable terminal 100 is bent over from the engagement unit 119, and receives from the gravity sensor 123-1 a gravity direction and calculates an angle R1 by which the portable terminal 100 is rotated with respect to the gravity direction. The controller 127 determines from the database the display location on a screen, 13 (X1, Y1), corresponding to the calculated angle R1, and displays information at the determined location (X1, Y1).

Thereafter, if a user turns a wrist, the controller 127 receives from the gravity sensor 123-1 the gravity direction and calculates a new angle R2 by which the portable terminal is rotated with respect to the gravity direction. The controller 127 determines from the database the display location on a screen, (X2, Y2), corresponding to the angle R2 received from the gravity sensor 123-1, and displays the information by adjusting the display location from (X1, Y2) to (X2, Y2).

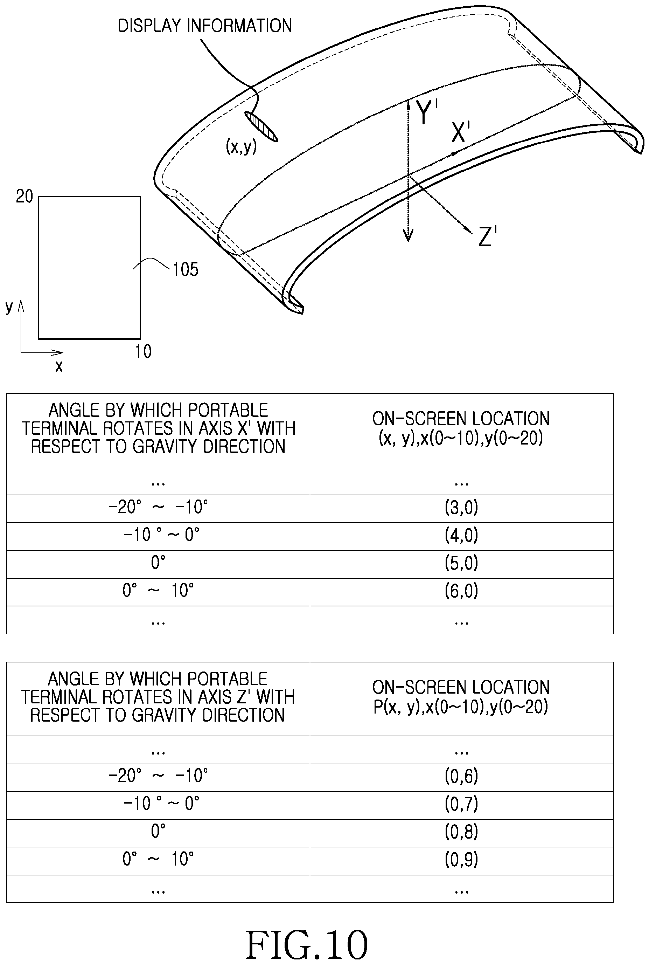

FIG. 10 illustrates a method of determining a display location on a screen in a portable terminal according to an exemplary embodiment of the present disclosure. Referring to FIG. 10, the controller 127 receives from the gravity sensor 123-1 a gravity direction and calculates an angle by which the portable terminal 100 is rotated in at least one or more directions with respect to the gravity direction. As illustrated, the controller 127 can calculate an angle by which the portable terminal is rotated about an axis X', that is, rotated in left and right directions of the screen with respect to the gravity direction, and can determine from the database a coordinate x on the screen (across the width of the screen) corresponding to the provided angle.

Further, the controller 127 can calculate an angle by which the portable terminal is rotated about an axis Z', that is, rotated in the upward and downward directions of the screen with respect to the gravity angle, and can determine from the database a coordinate y on the screen (along the length of the screen) corresponding to the provided angle.

In particular, the portable terminal 100 can store a database that provides a plurality of angle ranges and coordinates that are specified for each angle range. In addition, the controller 127 can configure an arithmetic algorithm for the database, and calculate a coordinate corresponding to an angle by which the portable terminal 100 is rotated with respect to the gravity direction by using the arithmetic algorithm. Figure 10 further illustrates an extract from such a database.

Methods based on the embodiments disclosed in the claims and/or specification of the present disclosure can be implemented in hardware, software, or a combination of both. When implemented in software, computer readable recording medium for storing one or more programs (i.e., software modules) can be provided. The one or more programs stored in the computer readable recording medium are configured for execution performed by one or more processors in an electronic device such as a portable terminal. The one or more programs include instructions for allowing the electronic device to execute the methods based on the embodiments disclosed in the claims and/or specification of the present disclosure.

The program (i.e., the software module or software) can be stored in a random access memory, a non-volatile memory including a flash memory, a Read Only Memory (ROM), an Electrically Erasable Programmable Read Only Memory (EEPROM), a magnetic disc storage device, a Compact Disc-ROM (CD-ROM), Digital Versatile Discs (DVDs) or other forms of optical storage devices, and a magnetic cassette.

Alternatively, the program can be stored in a memory configured in combination of all or some of these storage media. In addition, the configured memory can be plural in number. Further, the program can be stored in an attachable storage device capable of accessing the electronic device through a communication network such as the Internet, an Intranet, a Local Area Network (LAN), a Wide LAN (WLAN), a Storage Area Network (SAN), or a communication network configured by combining the networks. The storage device can access the electronic device through an external port. Furthermore, an additional storage device on the communication network can access a portable electronic device.

In conclusion, an information display method and apparatus of a portable terminal according to the present disclosure displays information at a location on a screen where a user easily watches when the portable terminal is bent around.

It will be appreciated that embodiments of the present invention can be realized in the form of hardware, software or a combination of hardware and software. Any such software may be stored in the form of volatile or non-volatile storage, for example a storage device like a ROM, whether erasable or rewritable or not, or in the form of memory, for example RAM, memory chips, device or integrated circuits or on an optically or magnetically readable medium, for example a CD, DVD, magnetic disk or magnetic tape or the like. It will be appreciated that the storage devices and storage media are embodiments of machine-readable storage that are suitable for storing a program or programs comprising instructions that, when executed, implement embodiments of the present invention.

Accordingly, embodiments, out of the scope of the invention, provide a program comprising code for implementing apparatus or a method as claimed in any one of the claims of this specification and a machine-readable storage storing such a program. Still further, such programs may be conveyed electronically via any medium, for example a communication signal carried over a wired or wireless connection.

Throughout the description and claims of this specification, the singular encompasses the plural unless the context otherwise requires. In particular, where the indefinite article is used, the specification is to be understood as contemplating plurality as well as singularity, unless the context requires otherwise.

Features, integers or characteristics described in conjunction with a particular aspect, embodiment or example of the invention are to be understood to be applicable to any other aspect, embodiment or example described herein unless incompatible therewith.

It will be also be appreciated that, throughout the description and claims of this specification, language in the general form of "X for Y" (where Y is some action, activity or step and X is some means for carrying out that action, activity or step) encompasses means X adapted or arranged specifically, but not exclusively, to do Y.

While the present disclosure has been particularly shown and described with reference to exemplary embodiments thereof, it will be understood by those skilled in the art that various changes in form and details may be made therein without departing from the scope of the present invention as defined by the appended claims.

## Claims

1. A method for displaying information on a portable terminal, the method comprising:
determining if the portable terminal (1, 100) is bent; and comprising:
calculating (803) a rotation angle by which the portable terminal (1, 100) is rotated with respect to gravity in response to determination of bending of the portable terminal (1, 100);
determining (805) a display location on a display screen corresponding to the calculated rotation angle, wherein the display location on the display screen corresponding to the calculated rotation angle is predefined based on a field of vision of a user; and
displaying display information at the predetermined display location; **characterised in that** the rotation angle is calculated for rotation about two axes, each axis being orthogonal to each other and to the direction of gravity; and
wherein the display location is determined along two orthogonal axes across the surface of the display screen.

2. The method of claim 1, wherein determining whether the portable terminal (1, 100) is bent comprises receiving a signal when a first end (1191) of the portable terminal (1, 100) is engaged with a second end (1192) of the portable terminal (1, 100).

3. The method of claim 2, wherein the signal is provided when a male connector (1192) located in the first end (1191) of the portable terminal (1, 100) is engaged with a female connector (1194) located in the second end (1192) of the portable terminal (1, 100).

4. The method of claim 2, wherein the signal is provided when a switch (1196) located in the first end (1191) of the portable terminal (1, 100) is engaged with a member located in the second end (1192) of the portable terminal (1, 100).

5. The method of claim 2, wherein the signal is provided when a sensor located in the first end (1191) of the portable terminal (1, 100) responds to a member for the sensor located in the second end (1192) of the portable terminal (1, 100).

6. The method of any one of the preceding claims, wherein displaying display information at the determined display location comprises moving the display information corresponding to a velocity at which the portable terminal (1, 100) rotates.

7. The method of any one of the preceding claims, wherein displaying display information at the determined display location comprises moving the display information in an opposite direction of a rotation direction in which the portable terminal (1, 100) rotates.

8. The method of any one of the preceding claims, wherein the display information includes at least one of a Short Message Service {SMS}, a Multimedia Message Service {MMS}, an e-mail, an application shortcut, a Social Network Service {SNS}, an alarm, and a software update.

9. A portable terminal comprising:
a display screen; and
a controller (127) configured to determine whether the portable terminal (1, 100) is bent; and
the controller (127) being configured to:
calculate (803) a rotation angle (R1, R2) by which the portable terminal (1, 100) is rotated with respect to the gravity direction in response to determination of bending of the portable terminal (1, 100);
determine (805) a display location on the display screen corresponding to the calculated rotation angle (R1, R2), wherein the display location on the display screen corresponding to the calculated rotation angle (R1, R2) is predefined based on a field of vision of user; and
display display information at the predetermined display location on the display screen;
**characterised in that** the rotation angle is calculated for rotation about two axes, each axis being orthogonal to each other and to the direction of gravity; and
wherein the display location is determined along two orthogonal axes across the surface of the display screen.

10. The portable terminal of claim 9, wherein the portable terminal (1, 100) further comprises a first sensor configured to provide the controller (127) with a signal reporting that the portable terminal (1, 100) is bent when a first end (1191) of the portable terminal (1, 100) is engaged with a second end (1192) of the portable terminal (1, 100).

11. The portable terminal of claim 10, wherein the first sensor has a male connector (1192) in the first end (1191) of the portable terminal (1, 100) and a female connector (1194) in the second end (1192) of the portable terminal (1, 100), and is configured to provide the signal when the male connector (1192) and the female connector (1194) are electrically connected each other; or
wherein the first sensor has a switch (1196) in the first end (1191) of the portable terminal (1, 100) and a member for turning on the switch (1196) in the second end (1192) of the portable terminal (1, 100), and is configured to provide the signal when the switch (1196) and the member are engaged; or
wherein the first sensor has a sensor in the first end (1191) of the portable terminal (1, 100) and a member for the sensor in the second end (1192) of the portable terminal (1, 100), and is configured to provide the signal when the sensor responds to the member of the sensor.

12. The portable terminal of any one of claims 9 to 11, wherein the portable terminal (1, 100) further comprises a gravity sensor (123-1) configured to provide the controller (127) with the rotation angle (R1, R2) by which the portable terminal (1, 100) is rotated in at least one direction with respect to the gravity direction.

13. The portable terminal of any one of claims 9 to 12, wherein the controller (127) is configured to move the display information corresponding to a velocity at which the portable terminal (1, 100) rotates.

14. The portable terminal of any one of claims 9 to 13, wherein the controller (127) is configured to move the display information in an opposite direction of a rotation in which the portable terminal (1, 100) rotates.

## Patentansprüche

1. Verfahren zum Anzeigen von Informationen auf einem tragbaren Endgerät, wobei das Verfahren Folgendes umfasst:
Bestimmen, ob das tragbare Endgerät (1, 100) gebogen ist; und
umfassend:
Berechnen (803) eines Drehwinkels, um den das tragbare Endgerät (1, 100) in Bezug auf die Schwerkraft als Reaktion auf ein Bestimmen der Biegung des tragbaren Endgeräts (1, 100) gedreht wird;
Bestimmen (805) einer Anzeigeposition auf einem Anzeigebildschirm, die dem berechneten Drehwinkel entspricht, wobei die Anzeigeposition auf dem Anzeigebildschirm, die dem berechneten Drehwinkel entspricht, basierend auf einem Blickfeld eines Benutzers vordefiniert ist; und
Anzeigen von Anzeigeinformationen an der vorbestimmten Anzeigeposition;
**dadurch gekennzeichnet, dass**
der Drehwinkel für eine Drehung um zwei Achsen berechnet wird, wobei jede Achse orthogonal zueinander und zu der Richtung der Schwerkraft ist; und
wobei die Anzeigeposition entlang zwei orthogonalen Achsen über die Fläche des Anzeigebildschirms bestimmt wird.

2. Verfahren nach Anspruch 1, wobei ein Bestimmen, ob das tragbare Endgerät (1, 100) gebogen ist, ein Empfangen eines Signals umfasst, wenn ein erstes Ende (1191) des tragbaren Endgeräts (1, 100) mit einem zweiten Ende (1192) des tragbaren Endgeräts (1, 100) in Eingriff steht.

3. Verfahren nach Anspruch 2, wobei das Signal bereitgestellt ist, wenn ein männlicher Verbinder (1192), der sich in dem ersten Ende (1191) des tragbaren Endgeräts (1, 100) befindet, in Eingriff mit einem weiblichen Verbinder (1194) steht, der sich in dem zweiten Ende (1192) des tragbaren Endgeräts (1, 100) befindet.

4. Verfahren nach Anspruch 2, wobei das Signal bereitgestellt wird, wenn ein Schalter (1196), der sich in dem ersten Ende (1191) des tragbaren Endgeräts (1, 100) befindet, in Eingriff mit einem Glied steht, das sich in dem zweiten Ende (1192) des tragbaren Endgeräts (1, 100) befindet.

5. Verfahren nach Anspruch 2, wobei das Signal bereitgestellt wird, wenn ein Sensor, der sich in dem ersten Ende (1191) des tragbaren Endgeräts (1, 100) befindet, auf ein Glied für den Sensor reagiert, der sich in dem zweiten Ende (1192) des tragbaren Endgeräts (1, 100) befindet.

6. Verfahren nach einem der vorhergehenden Ansprüche, wobei ein Anzeigen von Anzeigeinformationen an der bestimmten Anzeigeposition ein Bewegen der Anzeigeinformationen umfasst, die einer Schnelligkeit entsprechen, mit der sich das tragbare Endgerät (1, 100) dreht.

7. Verfahren nach einem der vorhergehenden Ansprüche, wobei ein Anzeigen der Anzeigeinformationen an der bestimmten Anzeigeposition ein Bewegen der Anzeigeinformationen in eine entgegengesetzte Richtung einer Drehrichtung umfasst, in die sich das tragbare Endgerät (1, 100) dreht.

8. Verfahren nach einem der vorhergehenden Ansprüche, wobei die Anzeigeinformationen mindestens eines von einem Short Message Service, SMS, einem Multimedia Message Service, MMS, einer E-Mail, einem Anwendungs-Shortcut, einem Social Network Service, SNS, einem Alarm und einer Softwareaktualisierung umfasst.

9. Tragbares Endgerät, das Folgendes umfasst:
einen Anzeigebildschirm; und
eine Steuerung (127), die konfiguriert ist, um zu bestimmen, ob das tragbare Endgerät (1, 100) gebogen ist; und
wobei die Steuerung (127) zu Folgendem konfiguriert ist:
Berechnen (803) eines Drehwinkels (R1, R2), um den das tragbare Endgerät (1, 100) in Bezug auf die Richtung der Schwerkraft als Reaktion auf ein Bestimmen des Biegens des tragbaren Endgeräts (1, 100) gedreht wird;
Bestimmen (805) einer Anzeigeposition auf dem Anzeigebildschirm, die dem berechneten Drehwinkel (R1, R2) entspricht, wobei die Anzeigeposition auf dem Anzeigebildschirm dem berechneten Drehwinkel (R1, R2) entspricht, der basierend auf einem Blickfeld eines Benutzers vordefiniert ist; und
Anzeigen von Anzeigeinformationen an der vorbestimmten Anzeigeposition auf dem Anzeigebildschirm;
**dadurch gekennzeichnet, dass**
der Drehwinkel für eine Drehung um zwei Achsen berechnet wird, wobei jede Achse orthogonal zueinander ist und zu der Richtung der Schwerkraft ist; und
wobei die Anzeigeposition entlang zwei orthogonalen Achsen über der Fläche des Anzeigebildschirms bestimmt wird.

10. Tragbares Endgerät nach Anspruch 9, wobei das tragbare Endgerät (1, 100) ferner einen ersten Sensor umfasst, der konfiguriert ist, um der Steuerung (127) ein Signal bereitzustellen, das berichtet, dass das tragbare Endgerät (1, 100) gebogen ist, wenn ein erstes Ende (1191) des tragbaren Endgeräts (1, 100) in Eingriff mit einem zweiten Ende (1192) des tragbaren Endgeräts (1, 100) steht.

11. Tragbares Endgerät nach Anspruch 10, wobei der erste Sensor einen männlichen Verbinder (1192) in dem ersten Ende (1191) des tragbaren Endgeräts (1, 100) und einen weiblichen Verbinder (1194) in dem zweiten Ende (1192) des tragbaren Endgeräts (1, 100) aufweist und konfiguriert ist, um das Signal bereitzustellen, wenn der männliche Verbinder (1192) und der weibliche Verbinder (1194) elektrisch miteinander verbunden sind; oder
wobei der erste Sensor einen Schalter (1196) in dem ersten Ende (1191) des tragbaren Endgeräts (1, 100) und ein Glied zum Einschalten des Schalters (1196) in dem zweiten Ende (1192) des tragbaren Endgeräts (1, 100) aufweist und konfiguriert ist, um das Signal bereitzustellen, wenn der Schalter (1196) und das Glied in Eingriff stehen; oder
wobei der erste Sensor einen Sensor in dem ersten Ende (1191) des tragbaren Endgeräts (1, 100) und ein Glied für den Sensor in dem zweiten Ende (1192) des tragbaren Endgeräts (1, 100) aufweist und konfiguriert ist, um das Signal bereitzustellen, wenn der Sensor auf das Glied des Sensors reagiert.

12. Tragbares Endgerät nach einem der Ansprüche 9 bis 11, wobei das tragbare Endgerät (1, 100) ferner einen Schwerkraftsensor (123-1) umfasst, der konfiguriert ist, um der Steuerung (127) den Drehwinkel (R1, R2) bereitzustellen, um den das tragbare Endgerät (1, 100) in mindestens eine Richtung in Bezug auf die Richtung der Schwerkraft gedreht wird.

13. Tragbares Endgerät nach einem der Ansprüche 9 bis 12, wobei die Steuerung (127) konfiguriert ist, um die Anzeigeinformationen entsprechend einer Schnelligkeit zu bewegen, mit der sich das tragbare Endgerät (1, 100) dreht.

14. Tragbares Endgerät nach einem der Ansprüche 9 bis 13, wobei die Steuerung (127) konfiguriert ist, um die Anzeigeinformationen in eine entgegengesetzte Drehrichtung zu bewegen, in die sich das tragbare Endgerät (1, 100) dreht.

## Revendications

1. Procédé permettant l'affichage d'informations sur un terminal portable, ledit procédé comprenant :
la détermination pour savoir si le terminal portable (1, 100) est plié ; et comprenant :
le calcul (803) d'un angle de rotation selon lequel le terminal portable (1, 100) est tourné par rapport à la gravité en réponse à la détermination du pliage du terminal portable (1, 100) ;
la détermination (805) d'un emplacement d'affichage sur un écran d'affichage correspondant à l'angle de rotation calculé, ledit emplacement d'affichage sur l'écran d'affichage correspondant à l'angle de rotation calculé étant prédéfini sur la base du champ de vision d'un utilisateur ; et
l'affichage des informations d'affichage au niveau de l'emplacement d'affichage déterminé ; **caractérisé en ce que**
l'angle de rotation est calculé pour une rotation autour de deux axes, chaque axe étant orthogonal à l'autre et à la direction de la gravité ; et
ledit emplacement d'affichage étant déterminé le long de deux axes orthogonaux sur la surface de l'écran d'affichage.

2. Procédé selon la revendication 1, ladite détermination pour savoir si le terminal portable (1, 100) est plié ou non comprenant la réception d'un signal lorsqu'une première extrémité (1191) du terminal portable (1, 100) est en prise avec une seconde extrémité (1192) du terminal portable (1, 100).

3. Procédé selon la revendication 2, ledit signal étant fourni lorsqu'un connecteur mâle (1192) situé dans la première extrémité (1191) du terminal portable (1, 100) est en prise avec un connecteur femelle (1194) situé dans la seconde extrémité (1192) du terminal portable (1, 100).

4. Procédé selon la revendication 2, ledit signal étant fourni lorsqu'un commutateur (1196) situé dans la première extrémité (1191) du terminal portable (1, 100) est en prise avec un élément situé dans la seconde extrémité (1192) du terminal portable (1, 100).

5. Procédé selon la revendication 2, ledit signal étant fourni lorsqu'un capteur situé dans la première extrémité (1191) du terminal portable (1, 100) répond à un élément pour le capteur situé dans la seconde extrémité (1192) du terminal portable (1, 100).

6. Procédé selon l'une quelconque des revendications précédentes, ledit affichage des informations d'affichage au niveau de l'emplacement d'affichage déterminé comprenant le déplacement des informations d'affichage correspondant à une vitesse à laquelle le terminal portable (1, 100) tourne.

7. Procédé selon l'une quelconque des revendications précédentes, ledit affichage des informations d'affichage au niveau de l'emplacement d'affichage déterminé comprenant le déplacement des informations d'affichage dans le sens inverse au sens de rotation dans lequel le terminal portable (1, 100) est tourné.

8. Procédé selon l'une quelconque des revendications précédentes, lesdites informations d'affichage comprenant au moins l'un d'un service de message court (SMS), d'un service de message multimédia (MMS), d'un courrier électronique, d'un raccourci d'application, d'un service de réseau social (SNS), d'une alarme et d'une mise à jour de logiciel.

9. Terminal portable comprenant : un écran d'affichage ; et
un dispositif de commande (127) configuré pour déterminer si le terminal portable (1, 100) est plié ; et
le dispositif de commande (127) étant configuré pour :
calculer (803) un angle de rotation (R1, R2) selon lequel le terminal portable (1, 100) est tourné par rapport à la direction de la gravité en réponse à la détermination du pliage du terminal portable (1, 100) ;
déterminer (805) un emplacement d'affichage sur l'écran d'affichage correspondant à l'angle de rotation calculé (R1, R2), ledit emplacement d'affichage sur l'écran d'affichage correspondant à l'angle de rotation calculé (R1, R2) étant prédéfini sur la base du champ de vision de l'utilisateur ; et
afficher les informations d'affichage au niveau de l'emplacement d'affichage déterminé sur l'écran d'affichage ; **caractérisé en ce que**
l'angle de rotation est calculé pour une rotation autour de deux axes, chaque axe étant orthogonal à l'autre et à la direction de la gravité ; et
ledit emplacement d'affichage étant déterminé le long de deux axes orthogonaux sur la surface de l'écran d'affichage.

10. Terminal portable selon la revendication 9, ledit terminal portable (1, 100) comprenant en outre un premier capteur configuré pour fournir au dispositif de commande (127) un signal rapportant que le terminal portable (1, 100) est plié lorsqu'une première extrémité (1191) du terminal portable (1, 100) est en prise avec une seconde extrémité (1192) du terminal portable (1, 100).

11. Terminal portable selon la revendication 10, ledit premier capteur possédant un connecteur mâle (1192) dans la première extrémité (1191) du terminal portable (1, 100) et un connecteur femelle (1194) dans la seconde extrémité (1192) du terminal portable (1, 100) et étant configuré pour fournir le signal lorsque le connecteur mâle (1192) et le connecteur femelle (1194) sont connectés électriquement l'un à l'autre ; ou
ledit premier capteur possédant un commutateur (1196) dans la première extrémité (1191) du terminal portable (1, 100) et un élément destiné à activer le commutateur (1196) dans la seconde extrémité (1192) du terminal portable (1, 100) et étant configuré pour fournir le signal lorsque le commutateur (1196) et l'élément sont en prise ; ou
ledit premier capteur possédant un capteur dans la première extrémité (1191) du terminal portable (1, 100) et un élément pour le capteur dans la seconde extrémité (1192) du terminal portable (1, 100) et étant configuré pour fournir le signal lorsque le capteur répond à l'élément du capteur.

12. Terminal portable selon l'une quelconque des revendications 9 à 11, ledit terminal portable (1, 100) comprenant en outre un capteur de gravité (123-1) configuré pour fournir au dispositif de commande (127) l'angle de rotation (R1, R2) selon lequel le terminal portable (1, 100) est tourné dans au moins une direction par rapport à la direction de la gravité.

13. Terminal portable selon l'une quelconque des revendications 9 à 12, ledit dispositif de commande (127) étant configuré pour déplacer les informations d'affichage correspondant à une vitesse à laquelle le terminal portable (1, 100) tourne.

14. Terminal portable selon l'une quelconque des revendications 9 à 13, ledit dispositif de commande (127) étant configuré pour déplacer les information d'affichage dans le sens inverse au sens de rotation dans lequel le terminal portable (1, 100) est tourné.
